# Europäisches Patentamt

# European Patent Office

# Office européen des brevets

(11) Publication number: **0 041 388**
**B1**

(12) **EUROPEAN PATENT SPECIFICATION**

(45) Date of publication of patent specification: **17.04.85**

(51) Int. Cl.⁴: **H 02 G 15/18**

(21) Application number: **81302412.2**

(22) Date of filing: **01.06.81**

(54) Heat recoverable closure assembly.

(30) Priority: **02.06.80 US 155817**

(43) Date of publication of application:
**09.12.81 Bulletin 81/49**

(45) Publication of the grant of the patent:
**17.04.85 Bulletin 85/16**

(84) Designated Contracting States:
**AT BE CH DE FR IT LI NL SE**

(56) References cited:
**EP-A-0 034 042**
**DE-A-2 807 154**
**DE-U-7 930 401**
**GB-A-1 376 038**
**US-A-4 142 592**

(73) Proprietor: **RAYCHEM CORPORATION**
**300 Constitution Drive**
**Menlo Park California 94025 (US)**

(72) Inventor: **Fentress, Vernon Alvin**
**4515, Ewing Street Castro Valley**
**CA. 94546 (US)**
Inventor: **Kinsch, Michael John**
**Rt. 1. Box 313 H**
**Half Moon Bay California 94019 (US)**

(74) Representative: **Benson, John Everett et al**
**Raychem Limited Intellectual Property Law**
**Department Swan House 37-39, High Holborn**
**London WC1 (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a heat-recoverable closure assembly for enclosing e.g. cable splices, to a support member or liner for use in such an assembly, and to a method of enclosing a body using such an assembly, and cable splices enclosed thereby.

U.S. Patent Number 4142592 describes an assembly for protecting and insulating cable splices wherein a heat-recoverable sleeve is shrunk down over a tubular support member which surrounds the spliced cable and has flexible prongs or fingers at its ends which can be deformed towards the cable to provide a tapered transition from the support member to the cable surface. In that U.S. patent, the fingers are provided in end pieces which fit into the generally tubular body of the support member, but the fingers and support member body could be integrally formed if desired. The present invention can be used to improve the vapour moisture resistance and heat-resistance of such closure assemblies.

The present invention accordingly provides a heat-recoverable closure assembly comprising a heat-recoverable outer sleeve surrounding a body to be enclosed thereby, a support member surrounding the body and within the sleeve which support member has slotted end portions arranged to be capable of forming a tapering transition from the support member to the body, and a flexible barrier layer associated with at least the slotted portions of the support member and bridging the slots thereof. The flexible barrier layer may cover substantially all of one major surface of the support member as well as bridging the slots of the slotted portions.

The barrier layer may be a vapour moisture barrier, for which purpose a metallic layer carried on a flexible carrier member is preferred, or the barrier may be a heat barrier, for which purpose flexible foam sheet is preferred. Both of these purposes may be served by a barrier comprising a metallic layer laminated with a flexible foam sheet.

The barrier layer may be inside or outside the support member as installed around the body to be enclosed, according to end use requirements, and it will be understood that the use of a heat barrier outside the support member is preferred when thermoplastic support members are to be used, the heat barrier then being arranged substantially to prevent thermal deformation of the support member during heat recovery of the sleeve. Preferably, the barrier layer will cover substantially the whole of a major surface of the support.

Metal supports, as known per se, can benefit from the present invention by virtue of reduced heat build up within the metal support during recovery of the heat-recoverable sleeve, and by reduced ingress of moisture at the slotted end portions. Thermoplastic supports can be used to provide relatively inexpensive closures, which nevertheless can have sufficient strength for use in forming cable splice enclosures of up to 200 mm diameter, calcium carbonate filled polypropylene being a preferred thermoplastic material for the support, and flexible foams of suitably high melting point, such as neoprene foam or cross-linked polyolefin end portions. Thermoplastic supports can be used to provide relatively inexpensive closures, which nevertheless can have sufficient strength for use in forming cable splice enclosures of up to 200 mm diameter, calcium carbonate filled polypropylene being a preferred thermoplastic material for the support, and flexible foams of suitably high melting point, such as neoprene foam or cross-linked polyolefin foam being preferred as the heat barrier layer for such thermoplastic supports.

The support and the barrier layer may be laminated together, convenient materials such as adhesives and convenient techniques being readily selected by a person familiar with such technology, and the resulting laminate may also include other layers. For example it may comprise the support, a vapour impermeable moisture barrier layer and a foam heat barrier layer. In the latter case, the moisture barrier layer may be sandwiched between the foam and the support, or may be carried on the outer surface of the foam. Other arrangements may also be used according to need. For example, the moisture barrier layer could be carried on the inner surface of the heat-recoverable sleeve, which can then receive the usual coating of heat activatable adhesive or sealant.

The support may be a flexible metal shield, or may comprise hinged segments of substantially rigid metal, and it will be understood that the support may have score lines or indentations in its surface arranged to facilitate wrapping around the body, such as a cable splice, to be protected.

In use, when the support is placed around the body to be protected and the slotted end portions or fingers are tapered down on to the body in question, e.g. to form a tapered transition from the support member to a cable surface, the barrier layer, being flexible, folds so as not to hinder the tapering of the fingers, while maintaining a barrier action by virtue of its bridging the slots. The assembly of the present invention is thus surprisingly versatile and can be advantageously adapted to improve the end result in a variety of working environments.

Embodiments of the invention will now be described in more detail with reference to the accompanying drawings wherein:

Figure 1 shows a closure assembly of known type having a heat-recoverable sleeve 8 surrounding a support member 5 with slotted end portions 1;

Figure 2 shows the assembly of Figure 1 installed around a cable splice 10 with the sleeve 8 recovered on to the support 5 and the slotted end portions 1 tapered on to the surface of the cable 11;

Figure 3 shows a support member 20 according to the present invention with the slotted portions 21 formed integrally therewith, and the barrier layer 22 on the outside thereof and covering not only the slotted end portions but substantially all of the outer surface of the support, which support is wrapped as it would be when placed around a body such as a cable;

Figure 4 shows a support member according to the present invention which is similar to that shown in Figure 3, except that the barrier layer 24 is inside a support member 23;

Figure 4a shows a magnified detail of the support shown in Figure 4, with the vapour moisture barrier 24 clearly bridging the slots between the fingers 21; and

Figure 5 illustrates a preferred laminated structure comprising a thermoplastic support member 25 and a foamed polymeric heat barrier 26 between which layers is sandwiched a flexible substantially vapour impermeable moisture barrier metallic layer 27.

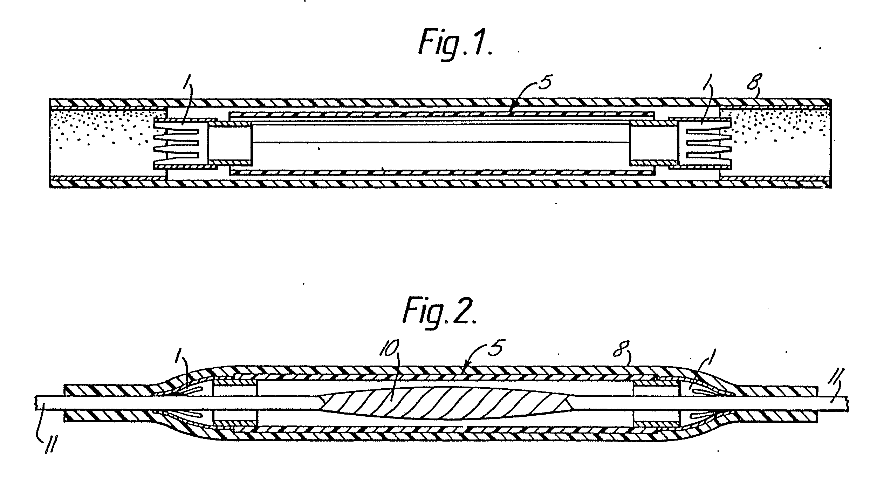

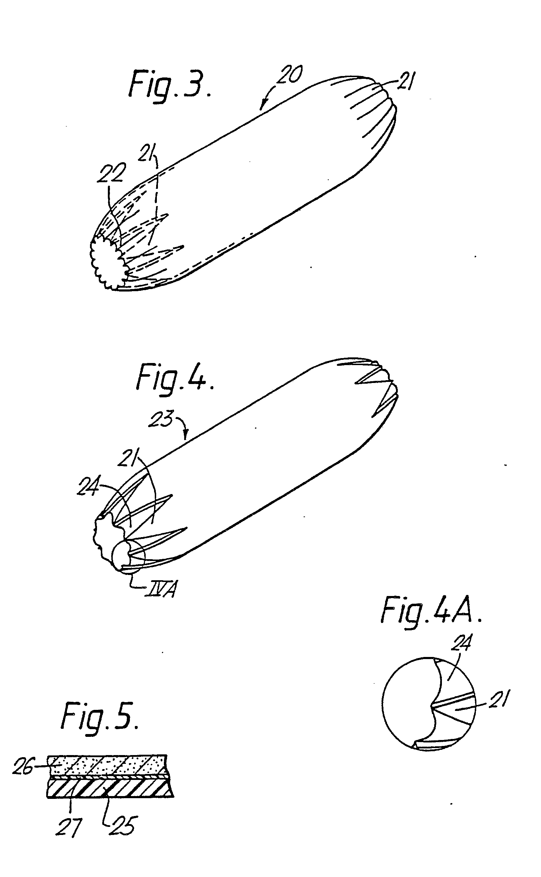

Referring now to the drawings, Figures 3 and 4 show how the principle of the present invention can be applied to supports such as the support 5 shown in Figures 1 and 2, since it is immaterial to the present invention whether or not the fingers are formed integrally with the body of the support.

Figure 3 shows a support member 20 of calcium carbonate filled polypropylene having slotted end portions arranged to form fingers 21 integrally with the body of the support, and a thermal barrier layer 22 of foamed neoprene (alternatively foamed cross-linked polyethylene) having sufficient heat resistance to avoid melting at temperatures encountered within the closure assembly in operation. The foam is flexible and bridges the slots between fingers 21 so as to provide a continuous barrier, and may be laminated with a vapour moisture barrier layer (not shown) e.g. a metallic layer, to enhance the moisture resistance of the assembly. The structure shown in Figure 5 comprising thermoplastic support member 25, metallic vapour barrier 27 and foam thermal barrier layer 26 could be used in this connection.

Figure 4 shows a support member 23 which is made of metal (or other material which is substantially infusible at temperatures encountered in use) and has an internal moisture barrier layer 24 bridging the slots between fingers 21. This moisture barrier layer could of course cover the whole internal surface of the support if the support material has any significant degree of moisture vapour permeability. The vapour barrier is a metallic coating carried on a flexible sheet, and the flexible sheet may be the aforementioned foam if it is desired to enhance the thermal insulation of the assembly. The construction of Figure 5 would again be suitable (but in reversed order from inside to outside) provided that the material of support member 25 were capable of withstanding the temperatures encountered in use without an external thermal barrier layer.

The metal support exemplified in Figure 4 could alternatively have a plastics barrier layer on one or both of its major surfaces, and could be indented or scored to provide hinged portions capable of facilitating wrapping of the support around a body such as a cable splice. Even if the indentations should cause the metal to break when a support is thus wrapped, the plastics coating would tend to remain intact, owing to its flexibility, thus maintaining the hinge connection and the protective function of the support.

The invention also provides a method of enclosing a body, comprising positioning about the body the aforementioned support layer, the aforementioned barrier layer, and the aforementioned sleeve, and heating to effect recovery of the sleeve about the body. A cable splice enclosed by this method or otherwise enclosed in a heat-recoverable closure assembly according to this invention is a major concern of this invention, and it will be understood that a kit of parts for making such cable splices can be provided.

The heat-recoverable sleeve may be any known suitable sleeve, either of the "closed" or "wraparound" kind, for example using elastic memory as described in our U.S. patents 2027962, 3086242, and 3957372, or using elastomeric recovery after a support holding the sleeve in a stretch state is softened by heating, as described in our British patent 1440524.

The aforementioned filled polypropylene support members are preferably 0.8 to 1.2 mm in thickness, and it will be understood that the barrier layer need not cover the entire surface of the support, although this is usually preferred.

## Claims

1. A heat-recoverable closure assembly comprising a heat-recoverable outer sleeve surrounding a body to be enclosed thereby, a support member (20) surrounding the body and within the sleeve which support member (20) has slotted end portions (21) arranged to be capable of forming a tapering transition from the support member to the body, characterised in that a flexible barrier layer (22) is associated with at least the slotted portions of the support member (20) and bridges the slots thereof.

2. A heat-recoverable closure assembly according to claim 1, characterised in that the flexible barrier layer (22) covers substantially all of one major surface of the support member (20) as well as bridging the slots of the slotted portions thereof.

3. An assembly according to claim 1 or 2, characterised in that the barrier layer (22) is a substantially vapour impermeable moisture barrier layer (27).

4. An assembly according to claim 1, 2 or 3, characterised in that the barrier layer (22) comprises a metallic layer (27) carried on a flexible carrier member.

5. An assembly according to any preceding claim, characterised in that the barrier layer (22) comprises a metallic layer (27) laminated with a flexible foam sheet (26).

6. An assembly according to claims 1 or 2, characterised in that the barrier layer (22) is a heat barrier layer (26).

7. An assembly according to claim 1, 2 or 3, characterised in that the barrier layer (22) comprises a flexible foam sheet.

8. An assembly according to any preceding claim, characterised in that the support member (20) is thermoplastic (25) and the barrier layer (22) is a heat barrier layer (26) arranged substantially to prevent thermal deformation of at least part of the support member (20) during heat recovery of the sleeve.

9. An assembly according to any of claims 1—3 and 6—8, characterised in that the support member (20) is thermoplastic (25) and the barrier layer (22) comprises foamed polymeric material (26) arranged substantially to prevent thermal deformation of at least part of the support member (20) during heat recovery of the sleeve.

10. An assembly according to any of claims 1—3 and 6—9, characterised in that the support member (20) is thermoplastic and the barrier layer (22) comprises foamed polymeric material (26) covering substantially the whole surface of the support member (20) which is outermost as installed around the body.

11. An assembly according to any of claims 1—3 and 8, characterised in that the barrier layer (22) is a coating of polymeric material on one or both main surfaces of the support member (20).

12. An assembly according to any preceding claim, characterised in that the barrier layer (22) and the support member (20) are laminated together.

13. An assembly according to any preceding claim, characterised in that a heat barrier layer (26) and the support member (20) and a substantially vapour impermeable moisture barrier layer (27) are laminated together.

14. An assembly according to any preceding claim, characterised in that the support member (20) is a flexible metal sheet.

15. An assembly according to any of claims 1—13, characterised in that the support member (20) comprises hinged segments of substantially rigid metal.

16. An assembly according to any preceding claim, characterised in that the barrier layer (22) is outside the support member (20) as installed around the body.

17. An assembly according to any of claims 1—15, characterised in that the barrier layer (22) is inside the support member (20) as installed around the body.

18. An assembly according to any preceding claim, characterised in that it is installed around a cable splice.

19. An assembly according to any of claims 1—17, wherein the body to be enclosed comprises a cable.

20. A method of enclosing a body which comprises positioning about the body firstly a support member (20) and a flexible barrier layer (22), and secondly a heat-recoverable outer sleeve, characterised in that the support member (20) has slotted end portions (21) arranged to be capable of forming a tapered transition from the support member to the body, and has the flexible barrier layer associated therewith such that it bridges the slots of the slotted portions thereof.

21. A method according to claim 20 characterised in that the barrier layer (22) covers substantially all of one major surface of the support member (20) as well as bridging the slots of the slotted portions thereof.

22. A kit of parts, characterised in that it comprises a heat-recoverable sleeve, a support member (20) and a barrier layer (22) for making a closure assembly according to any of claims 1—17.

**Patentansprüche**

1. Wärmerückstellbare Verschlußanordnung, die eine wärmerückstellbare äußere Muffe, die einen zu umschließenden Körper umgibt, und ein Stützelement (20) aufweist, das den Körper umgibt und sich innerhalb der Muffe befindet, wobei das Stützelement (20) geschlitzte Endabschnitte (21) hat, die derart angeordnet sind, daß sie einen konischen Übergang von dem Stützelement zu dem Körper bilden, dadruch gekennzeichnet, daß eine flexible Sperrschicht (22) wenigstens den geschlitzten Abschnitten des Stützelements (20) zugeordnet ist und die Schlitze desselben überbrückt.

2. Wärmerückstellbare Verschlußanordnung nach Anspruch 1, dadurch gekennzeichnet, daß die flexible Sperrschicht (22) im wesentlichen insgesamt eine Hauptfläche des Stützelements (20) bedeckt sowie die Schlitze der geschlitzten Abschnitte desselben überbrückt.

3. Anordnung nach Anspruch 1 oder 2, dadurch gekennzeichnet, daß die Sperrschicht (22) eine im wesentlichen dampfundurchlässige Feuchtigkeitssperrschicht (27) ist.

4. Anordnung nach Anspruch 1, 2 oder 3, dadurch gekennzeichnet, daß die Sperrschicht (22) eine metallische Schicht (27) aufweist, die auf einem flexiblen Trägerelement getragen ist.

5. Anordnung nach einem der vorhergehenden Ansprüche, dadurch gekennzeichnet, daß die Sperrschicht (22) eine metallische Schicht (27) aufweist, die mit einem flexiblen Schaum-Flächenmaterial (26) laminiert ist.

6. Anordnung nach Anspruch 1 oder 2, dadurch gekennzeichnet, daß die Sperrschicht (22) eine Wärmesperrschicht (26) ist.

7. Anordnung nach Anspruch 1, 2 oder 3, dadurch gekennzeichnet, daß die Sperrschicht (22) ein flexibles Schaum-Flächenmaterial aufweist.

8. Anordnung nach einem der vorhergehenden Ansprüche, dadurch gekennzeichnet, daß das Stützelement (20) thermoplastisch (25) ist und die Sperrschicht (22) eine Wärmesperrschicht (26) ist, die im wesentlichen angeordnet ist, um die thermische Deformation wenigstens eines Teils des Stützelements (20) während der Wärmerückstellung der Muffe zu verhindern.

9. Anordnung nach einem der Ansprüche 1 bis 3 und 6 bis 8, dadurch gekennzeichnet, daß das Stützelement (20) thermoplastisch (25) ist, und daß die Sperrschicht (22) ein geschäumtes polymeres Material (26) aufweist, das im wesentlichen vorgesehen ist, um die thermische Deformation wenigstens eines Teils des Stützelements (20) während der Wärmerückstellung der Muffe zu verhindern.

10. Anordnung nach einem der Ansprüche 1 bis 3 und 6 bis 9, dadurch gekennzeichnet, daß das Stützelement (20) thermoplastisch ist und die Sperrschicht (22) geschäumtes polymeres Material (26) aufweist, das im wesentlichen die gesamte Fläche des Stützelements (20) bedeckt, das im um den Körper eingebauten Zustand am weitesten außen liegt.

11. Anordnung nach einem der Ansprüche 1 bis 3 und 8, dadurch gekennzeichnet, daß die Sperrschicht (22) ein Überzug aus polymerem Material auf einer oder beiden Hauptflächen des Stützelements (20) ist.

12. Anordnung nach einem der vorhergehenden Ansprüche, dadurch gekennzeichnet, daß die Sperrschicht (22) und das Stützelement (20) zusammengeschichtet sind.

13. Anordnung nach einem der vorhergehenden Ansprüche, dadurch gekennzeichnet, daß eine Wärmesperrschicht (26) und das Stützelement (20) und eine im wesentlichen dampfundurchlässige Feuchtigkeitssperrschicht (27) zusammengeschichtet sind.

14. Anordnung nach einem der vorhergehenden Ansprüche, dadurch gekennzeichnet, daß das Stützelement (20) ein flexibles Metallblech ist.

15. Anordnung nach einem der Ansprüche 1 bis 13, dadurch gekennzeichnet, daß das Stützelement (20) Gelenksegmente aus im wesentlichen starrem Metall aufweist.

16. Anordnung nach einem der vorhergehenden Ansprüche, dadurch gekennzeichnet, daß die Sperrschicht (22) außerhalb des Stützelements (20) im um den Körper eingebauten Zustand vorgesehen ist.

17. Anordnung nach einem der Ansprüche 1 bis 15, dadurch gekennzeichnet, daß die Sperrschicht (22) innerhalb des Stützelements (20) in seinem um den Körper eingebauten Zustand vorgesehen ist.

18. Anordnung nach einem der vorhergehenden Ansprüche, dadurch gekennzeichnet, daß sie um eine Kabelspleißung angebracht ist.

19. Anordnung nach einem der Ansprüche 1 bis 17, dadurch gekennzeichnet, daß der zu umschliessende Körper ein Kabel ist.

20. Verfahren zum Umschließen eines Körpers, bei dem um den Körper zuerst ein Stützelement (20) und eine flexible Sperrschicht (22) gelegt werden und dann eine wärmerückstellbare äußere Muffe angebracht wird, dadurch gekennzeichnet, daß das Stützelement (20) geschlitzte Endabschnitte (21) hat, die so angeordnet sind, daß sie fähig sind, einen konischen Übergang von dem Stützelement zum Körper zu bilden, und das eine damit verbundene flexible Sperrschicht derart hat, daß sie die Schlitze der geschlitzten Abschnitte überrückt.

21. Verfahren nach Anspruch 20, dadurch gekennzeichnet, daß die Sperrschicht (22) im wesentlichen eine Hauptfläche des Stützelements (20) insgesamt bedeckt sowie die Schlitze der geschlitzten Abschnitte überbrückt.

22. Teilesatz, dadurch gekennzeichnet, daß er eine wärmerückstellbare Muffe, ein Stützelement (20) und eine Sperrschicht (22) zur Herstellung einer Verschlußanordnung nach einem der Ansprüche 1 bis 17 aufweist.

**Revendications**

1. Assemblage de fermeture à reprise thermique comprenant un manchon extérieur à reprise thermique entourant un corps devant être enfermé par celui-ci, un organe de support (20) entourant le corps et, à l'intérieur du manchon, cet organe de support (20) présentant des parties terminales fendues (21) qui sont agencées pour pouvoir établir une transition convergente depuis l'organe de support jusqu'au corps, caractérisé en ce qu'une couche-barrière flexible (22) est associée avec au moins les parties fendues de l'organe de support (20) et pontent les fentes dans celui-ci.

2. Assemblage de fermeture à reprise thermique selon la revendication 1, caractérisé en ce que la couche-barrière flexible (22) couvre sensiblement la totalité d'une surface majeure de l'organe de support (20) et aussi ponte les fentes des parties fendues de celui-ci.

3. Assemblage selon la revendication 1 ou 2, caractérisé en ce que la couche-barrière (22) est une couche-barrière sensiblement imperméable de l'humidité de la vapeur (27).

4. Assemblage selon la revendication 1, 2 ou 3, caractérisé en ce que la couche-barrière (22) comprend une couche métallique (27) portée sur un organe de support flexible.

5. Assemblage selon l'une quelconque des revendications précédentes, caractérisé en ce que la couche-barrière (22) comprend une couche métallique (27) stratifiée à une feuille de mousse flexible (26).

6. Assemblage selon la revendication 1 ou 2, caractérisé en ce que la couche-barrière (22) est une couche de barrière thermique (26).

7. Assemblage selon la revendication 1, 2 ou 3, caractérisé en ce que la couche-barrière (22) comprend une feuille de mousse flexible.

8. Assemblage selon l'une quelconque des revendications précédentes, caractérisé en ce que l'organe de support (20) est thermoplastique (25) et la couche-barrière (22) est une couche-barrière thermique (26) disposée sensiblement pour empêcher la déformation thermique d'au moins une partie de l'organe de support (20) pendant la reprise thermique du manchon.

9. Assemblage selon l'une quelconque des revendications 1 à 3 et 6 à 8, caractérisé en ce que l'organe de support (20) est thermoplastique (25) et la couche-barrière (22) comprend une mousse de matière polymère (26) disposée sensiblement pour empêcher la déformation thermique d'au moins une partie de l'organe de support (20) pendant la reprise thermique du manchon.

10. Assemblage selon l'une quelconque des revendications 1 à 3 et 6 à 9, caractérisé en ce que l'organe de support (20) est thermoplastique et la couche-barrière (22) comprend une mousse de matière polymère (26) couvrant sensiblement toute la surface de l'organe de support (20) qui est le plus à l'extérieur lors de l'installation autour du corps.

11. Assemblage selon l'une quelconque des revendications 1 à 3 et 8, caractérisé en ce que la couche-barrière (22) est un revêtement en une matière polymère sur une ou les deux surfaces principales de l'organe de support (20).

12. Assemblage selon l'une quelconque des revendications précédentes, caractérisé en ce que la couche-barrière (22) et l'organe de support (20) sont stratifiés ensemble.

13. Assemblage selon l'une quelconque des revendications précédentes, caractérisé en ce que la couche-barrière thermique (26) et l'organe de support (20) ainsi qu'une couche-barrière d'humidité sensiblement imperméable à la vapeur (27) sont stratifiés ensemble.

14. Assemblage selon l'une quelconque des revendications précédentes, caractérisé en ce que l'organe de support (20) est en tôle métallique flexible.

15. Assemblage selon l'une quelconque des revendications 1 à 13, caractérisé en ce que l'organe de support (20) comprend des segments en un métal sensiblement rigide réunis par charnières.

16. Assemblage selon l'une quelconque des revendications précédentes, caractérisé en ce que la couche-barrière (22) est à l'extérieur du l'organe de support (20) quand il est installé autour du corps.

17. Assemblage selon l'une quelconque des revendications 1 à 15, caractérisé en ce que la couche-barrière (22) est à l'intérieur de l'organe de support (20) quand il est installé autour du corps.

18. Assemblage selon l'une quelconque des revendications précédentes, caractérisé en ce qu'il est monté autour d'une épissure de câble.

19. Assemblage selon l'une quelconque des revendications 1 à 17, dans lequel le corps à enfermer comprend un câble.

20. Procédé pour enfermer un corps qui consiste à positionner autour du corps d'abord un organe de support (20) et une couche-barrière flexible (22) et, en second lieu, un manchon extérieur à reprise thermique, caractérisé en ce que l'organe de support (20) présente des parties terminales fendues (21) agencées pour pouvoir former une transition convergente de l'organe de support au corps, et une couche-barrière flexible est associée avec lui de façon à ponter les fentes dans les parties fendues du support.

21. Procédé selon la revendication 20, caractérisé en ce que la couche-barrière couvre sensiblement la totalité d'une surface majeure de l'organe de support (20) et aussi ponte les fentes de ses parties fendues.

22. Trousse de pièces, caractérisée en ce qu'elle comprend un manchon à reprise thermique, un organe de support (20) et une couche-barrière (22) pour établir un ensemble de fermeture selon l'une quelconque des revendications 1 à 17.

*Fig.1.*

*Fig.2.*

0 041 388

**Fig.3.**

**Fig.4.**

**Fig.4A.**

**Fig.5.**